# EUROPEAN PATENT APPLICATION

(11) **EP 4 376 156 A1**
(43) Date of publication of application: **29.05.2024**
(21) Application number: 22942956.8
(22) Date of filing: 14.10.2022
(51) Int. Cl.: H01M 10/42, H01M 4/36

(54) **POSITIVE ELECTRODE LITHIUM SUPPLEMENTING MATERIAL AND PREPARATION METHOD, POSITIVE ELECTRODE SHEET, SECONDARY BATTERY AND ELECTRIC DEVICE**

(71) Applicant: Contemporary Amperex Technology Co., Limited, Ningde, Fujian 352100 (CN)
(72) Inventor: LIU, Xin, Ningde Fujian 352100 (CN); HUANG, Qisen, Ningde Fujian 352100 (CN); LI, Cheng, Ningde Fujian 352100 (CN); LI, Mingling, Ningde Fujian 352100 (CN); LIU, Xianghui, Ningde Fujian 352100 (CN)
(74) Representative: von Tietzen und Hennig, Nikolaus
(86) International application number: PCT/CN2022/125441
(87) International publication number: WO 2024/077608

(57) **Abstract**

A positive lithium supplement material, a method of preparing a positive lithium supplement material, a positive electrode plate, a secondary battery and an electrical device are provided. The positive lithium supplement material includes a core, an inorganic coating layer coated on at least part of a surface of the core, and an organic coating layer coated on at least part of a surface of the inorganic coating layer away from the core. The core includes LiₓM_{y}O_{z}, and the M element includes at least one of Al, Ti, V, Cr, Mn, Fe, Co, Ni, Cu, or Zn, wherein 2 ≤ x ≤ 6, 1 ≤ y ≤ 2, 2 ≤ z ≤ 4, and the core is electric neutrality.

## Description

### FIELD

The present disclosure relates to the field of lithium battery materials, and in particular, to a positive lithium supplement material, a preparation method of a positive lithium supplement material, a positive electrode plate, a secondary battery, and an electrical device.

### BACKGROUND

Lithium-ion batteries are widely used in portable electronic devices, electric vehicles, and energy storage systems due to their high energy density, long cycle life, and good rate capability. How to further improve the energy density and cycle life of lithium-ion batteries is also a research hotspot of scholars all over the world. The energy density of the battery is directly determined by the negative and positive electrode materials. The reversible gram capacities of lithium cobaltate, lithium iron phosphate and high nickel ternary materials are at a high level. The further improvement of the gram capacity is prone to cause the collapse of the structure of the material, which results in significant decrease in the reversibility of the cycle.

Furthermore, the loss of lithium is a direct cause of battery degradation. For example, during the first charge and discharge of the cell, the electrolytic solution may undergo a reduction and decomposition reaction on a surface of the negative electrode and form a solid electrolyte interface film (SEI film). The formation of the SEI film consumes a large amount of active lithium, resulting in decrease in the actual energy density of the battery as compared with the theoretical value. During the cycle process of the cell, active lithium is continuously consumed by the cracking and crushing of the positive electrode particles and the thickening and repairing of the SEI film, such that the cycle performance of the battery is significantly decreased. In order to further improve the energy density and cycle performance of the battery, a lithium supplement additive is provided. Before the operation of the lithium battery, the lithium supplement additive can supplement lithium ions into the battery by adding lithium, to solve the problems of low energy density, low first-cycle efficiency, and poor cycle life of the lithium battery. At present, the positive lithium supplement materials are in the early stage of development, but there are still many shortcomings.

Therefore, the current positive lithium supplement materials, the preparation method of positive lithium supplement materials, the positive electrode plates, the secondary batteries and the electrical devices still need to be improved.

### SUMMARY

The present disclosure is made based on the discovery and comprehension by the inventors based on the following facts and problems.

On the one hand, the lithium supplement additive can supplement the loss of active lithium caused by the formation of SEI in the first charge and discharge process of the cell. In this way, the cell has enough reversible active lithium in the subsequent cycle to improve the energy density of the cell. On the other hand, the lithium supplement additive can also be used to compensate the lithium consumption during the cycle process and improve the cycle performance of the cell. The lithium supplement additive can be further divided into a positive lithium supplement additive and a negative lithium supplement additive based on the acting position of the lithium supplement additive in the battery.

The inventors have found that the common negative lithium supplement additives, such as metal lithium powder, lithium strip, and other high-activity materials, are prone to react with water, air and the like and thus have safety risk. Therefore, the negative lithium supplement additives have very high requirements for production environment and production management, and are difficult to be applied on a large scale. The common positive lithium supplement additives, such as lithium oxide, sulfide, and nitride, have relatively high material safety, can be added during the preparation of a positive electrode slurry, and are easier to operate. The inventors have also found that although the positive lithium supplement material has the advantages of easy preparation and high safety, the positive lithium supplement material still has a problem of easy reaction with water, air and the like.

The present disclosure is directed to at least partially alleviating or solving at least one of the above problems.

In an aspect of the present disclosure, a positive lithium supplement material is provided. The positive lithium supplement material includes a core, an inorganic coating layer coated on at least part of a surface of the core, and an organic coating layer coated on at least part of a surface of the inorganic coating layer away from the core. The core includes LiₓM_{y}O_{z}, and the M element includes at least one of Al, Ti, V, Cr, Mn, Fe, Co, Ni, Cu, or Zn, wherein 2 ≤ x ≤ 6, 1 ≤ y ≤ 2, 2 ≤ z ≤ 4, and the core is electric neutrality. The core is coated with inorganic and organic components, such that the structural stability of the positive lithium supplement material can be significantly improved. The production and use cycle requirements of the positive lithium supplement material can be satisfied. Significant results are achieved in supplementing an active lithium source of the cell, increasing the cell energy density, and cycling performance.

According to an embodiment of the present disclosure, the inorganic coating layer includes an oxide, and the oxide includes a binary oxide and/or a ternary oxide. Thus, the hydrophobicity of the positive lithium supplement material can be improved, and residual alkali on the surface of the core is consumed.

According to an embodiment of the present disclosure, the binary oxide includes at least one of elements in the main group III, the main group IV, the main group V, and the main group VI of the second period, the third period, and the fourth period, and transition metal elements having n-divalent, n-trivalent, or n-tetravalent in the fourth period. Thus, it is possible to further improve the hydrophobicity of the positive lithium supplement material.

According to an embodiment of the present disclosure, the binary oxide includes at least one of boron oxide, aluminum oxide, phosphorus oxide, arsenic oxide, antimony oxide, selenium oxide, titanium oxide, chromium oxide, manganese oxide, cobalt oxide, or copper oxide. Thus, it is possible to further improve the hydrophobicity of the positive lithium supplement material.

According to an embodiment of the present disclosure, the binary oxide has a melting point equal to or smaller than 600°C. Thus, the coating uniformity of the inorganic coating layer can be improved.

According to an embodiment of the present disclosure, the binary oxide includes at least one of B₂O₃, P₂O₃, P₂O₅, As₂0₃, Sb₂O₃, Sb₂O₅, or SeO₂. Thus, it is possible to further improve the hydrophobicity of the positive lithium supplement material.

According to an embodiment of the present disclosure, the ternary oxide is a lithium-containing oxide. The lithium-containing oxide includes at least one of elements in the main group III, the main group IV, the main group V, and the main group VI of the second period, the third period, and the fourth period, and transition metal elements having n-divalent, n-trivalent, or n-tetravalent in the fourth period. Thus, it is possible to consume residual alkali on the surface of the core and increase the hydrophobicity of the positive lithium supplement material.

According to an embodiment of the present disclosure, the ternary oxide includes at least one of lithium boron oxide, lithium phosphorus oxide, lithium arsenic oxide, lithium titanium oxide, lithium chromium oxide, manganese oxide, lithium cobalt oxide, lithium copper oxide, or lithium. Thus, it is possible to further improve the hydrophobicity of the positive lithium supplement material.

According to an embodiment of the present disclosure, a mass fraction of the inorganic coating layer of the positive lithium supplement material is in a range of 0.5 wt% to 10 wt%. Thus, it is possible to further improve the hydrophobicity of the positive lithium supplement material.

According to an embodiment of the present disclosure, a mass fraction of the ternary oxide of the inorganic coating layer is in a range of 5 wt% to 50 wt%. Thus, it is possible to further consume residual alkali on the surface of the core and increase the hydrophobicity of the positive lithium supplement material.

According to an embodiment of the present disclosure, the organic coating layer includes an organic polymer. The organic polymer includes at least one of polytetrafluoroethylene, polyethylene, polypropylene, polystyrene, amino-polystyrene, ethylene-vinyl acetate copolymer, polydimethylsiloxane and derivatives thereof, epoxy resin, polyacrylonitrile, polyvinylpyrrolidone, or alkylsilane and derivatives thereof. Thus, the coating uniformity of the organic coating layer and the hydrophobicity of the positive lithium supplement material can be improved.

According to embodiments of the present disclosure, the polydimethylsiloxane derivative includes at least one of polydimethylsiloxane, cyclomethicone, aminosiloxane, polymethylphenyl siloxane, or polyether polysiloxane copolymer. Thus, the coating uniformity of the organic coating layer and the hydrophobicity of the positive lithium supplement material can be improved.

According to an embodiment of the present disclosure, the organic coating layer further includes a conductive material. Thus, the electrical conductivity of the positive lithium supplement material can be improved.

According to an embodiment of the present disclosure, the conductive material includes a conductive carbon material, and the conductive carbon material includes at least one of conductive carbon black, single-walled carbon nanotubes, multi-walled carbon nanotubes, fullerenes, or graphene. Thus, the electrical conductivity of the positive lithium supplement material can be further improved.

According to an embodiment of the present disclosure, a mass fraction of the organic coating layer of the positive lithium supplement material is in a range of 0.5 wt% to 10 wt%. Thus, it is possible to further improve the hydrophobicity of the positive lithium supplement material.

According to an embodiment of the present disclosure, the core has a median particle diameter in a range of 5 µm to 20 µm. Thus, the structural uniformity of the positive lithium supplement material can be improved.

According to an embodiment of the present disclosure, the inorganic coating layer has a thickness in a range of 5 nm to 50 nm. Thus, the structural uniformity of the positive lithium supplement material can be improved.

According to an embodiment of the present disclosure, the organic coating layer has a thickness in a range of 5 nm to 50 nm. Thus, the structural uniformity of the positive lithium supplement material can be improved.

In another aspect of the present disclosure, a method of preparing a positive lithium supplement material is provided. The method includes: providing a core, the core including LiₓM_{y}O_{z}, the M element including at least one of Al, Ti, V, Cr, Mn, Fe, Co, Ni, Cu, or Zn, wherein 2 ≤ x ≤ 6, 1 ≤ y ≤ 2, 2 ≤ z ≤ 4; forming an inorganic coating layer on at least part of a surface of the core; and obtaining the positive lithium supplement material by forming an organic coating layer on at least part of a surface of the inorganic coating layer away from the core. Thus, it is possible to prepare a positive lithium supplement material with superior structural stability, to meet the production and use cycle requirements of the positive lithium supplement material, and to achieve significant effects of supplementing the active lithium source of the cell, improving the energy density and cycle performance of the cell.

According to an embodiment of the present disclosure, the providing the core includes: obtaining LiₓM_{y}O_{z} by mixing an oxide containing the M element with a lithium source and performing first heating treatment on the oxide and the lithium source. The number of moles of the lithium element during the mixing is a, the number of moles of the M element during the mixing is b, a ratio of a to b is m, a ratio of x to y is n, a ratio of a difference between m and n to n is c, and c is in a range of 0% to 50%. Thus, the core can be prepared by a relatively simple method.

According to an embodiment of the present disclosure, the lithium source includes at least one of lithium hydroxide, lithium oxide, lithium acetate, lithium carbonate, lithium nitrate, or lithium oxalate. Thus, the core can be prepared by a relatively simple method.

According to an embodiment of the present disclosure, the mixing is ball-milling mixing, the ball-milling mixing is performed at a rotational speed in a range of 200 rpm to 600 rpm, and a duration of the ball-milling mixing is in a range of 2 h to 12 h. Thus, the core can be prepared by a relatively simple method.

According to an embodiment of the present disclosure, a temperature of the first heating treatment is in a range of 400°C to 900°C, and a duration of the first heating treatment is in a range of 6 h to 48 h. Thus, the core can be prepared by a relatively simple method.

According to an embodiment of the present disclosure, the forming the inorganic coating layer on at least part of the surface of the core includes: obtaining the core having the inorganic coating layer on at least part of the surface of the core by mixing an oxide with the core and performing second heating treatment on the oxide and the core, wherein the oxide is a binary oxide. Thus, the inorganic coating layer can be formed on the surface of the core by a relatively simple method.

According to an embodiment of the present disclosure, the binary oxide includes at least one of B₂O₃, P₂O₃, P₂O₅, As₂0₃, Sb₂O₃, SbzOs, SeOz, TiO₂, Cr₂O₃, MnOz, CoO, CuO, or Al₂O₃. Thus, the inorganic coating layer can be formed on the surface of the core by a relatively simple method.

According to an embodiment of the present disclosure, a temperature of the second heating treatment is equal to or greater than a melting point of the binary oxide. Thus, an inorganic coating layer having high coating uniformity can be formed on the surface of the core by a relatively simple method.

According to an embodiment of the present disclosure, the oxide includes a plurality of binary oxides, and a temperature of the second heating treatment is equal to or greater than a melting point of at least one of the plurality of binary oxides. Thus, an inorganic coating layer having high coating uniformity can be formed on the surface of the core by a relatively simple method.

According to an embodiment of the present disclosure, a duration of the second heating treatment is in a range of 2 h to 12 h. Thus, an inorganic coating layer having high coating uniformity can be formed on the surface of the core by a relatively simple method.

According to an embodiment of the present disclosure, the forming the organic coating layer on at least part of the surface of the inorganic coating layer away from the core includes: obtaining a dispersion by mixing the core having the inorganic coating layer on at least part of the surface of the core with a polymer solution and performing third heating treatment on the core and polymer solution; and obtaining the positive lithium supplement material by performing fourth heating treatment on the dispersion. Thus, the organic coating layer can be formed by a relatively simple method.

According to an embodiment of the present disclosure, the polymer solution includes at least one of polytetrafluoroethylene micropowder, polyethylene micropowder, polypropylene micropowder, polystyrene micropowder, amino-polystyrene micropowder, ethylene-vinyl acetate copolymer, polydimethylsiloxane and derivatives thereof, epoxy resin, polyacrylonitrile, polyvinylpyrrolidone, or alkylsilane and derivatives thereof. Thus, the organic coating layer can be formed by a relatively simple method.

According to an embodiment of the present disclosure, the polymer solution includes a conductive carbon material, and the conductive carbon material includes at least one of conductive carbon black, single-walled carbon nanotubes, multi-walled carbon nanotubes, fullerenes, or graphene. Thus, the electrical conductivity of the positive lithium supplement material can be improved.

According to an embodiment of the present disclosure, a temperature of the third heating treatment is in a range of 50°C to 150°C. Thus, the organic coating layer can be formed by a relatively simple method.

According to an embodiment of the present disclosure, a temperature of the fourth heating treatment is in a range of 200°C to 400°C, and/or a duration of the fourth heating treatment is in a range of 1 h to 6 h. Thus, the organic coating layer can be formed by a relatively simple method.

In yet another aspect of the present disclosure, a positive electrode plate is provided. The positive electrode plate includes a positive electrode current collector and a positive active substance layer. The positive active substance layer includes the above positive lithium supplement material and/or the positive lithium supplement material prepared by the above method. Thus, the positive electrode plate has all the features and advantages of the above positive lithium supplement material and/or the above method, which will not be described in detail herein.

In yet another aspect of the present disclosure, a secondary battery is provided. The secondary battery includes the positive electrode plate as described above. Accordingly, the secondary battery has all the features and advantages of the positive electrode plate described above, and will not be described in detail herein.

In yet another aspect of the present disclosure, an electrical device is provided. The electrical device includes the secondary battery as described above. Thus, th e electrical device has all the features and advantages of the secondary battery as described above, and will not be described in detail herein.

### BRIEF DESCRIPTION OF DRAWINGS

The foregoing and/or additional aspects and advantages of the present disclosure will become apparent and readily appreciated from the following description of the embodiments in conjunction with the accompanying drawings.
FIG. 1 is a schematic structural view of a positive lithium supplement material according to an embodiment of the present disclosure.
FIG. 2 is a scanning electron micrograph of a core of a positive lithium supplement material according to an embodiment of the present disclosure.
FIG. 3 is a scanning electron micrograph of an inorganic coating layer of a positive lithium supplement material according to an embodiment of the present disclosure.
FIG. 4 is a scanning electron micrograph of a positive lithium supplement material according to an embodiment of the present disclosure.
FIG. 5 is a schematic flowchart of a method for preparing a positive lithium supplement material according to an embodiment of the present disclosure.
FIG. 6 is a schematic flowchart of a method for preparing a positive lithium supplement material according to an embodiment of the present disclosure.

### Description of Reference Signs:

100 core; 200 inorganic coating layer; 300 organic coating layer.

### DESCRIPTION OF EMBODIMENTS

Reference will now be made in detail to the embodiments of the present disclosure, examples of which are illustrated in the accompanying drawings, wherein the same or similar reference signs refer to the same or similar elements throughout the drawings, and the same or similar reference signs refer to the same or similar elements throughout the drawings. The embodiments described below with reference to the figures are illustrative only and should not be construed as limiting the present disclosure.

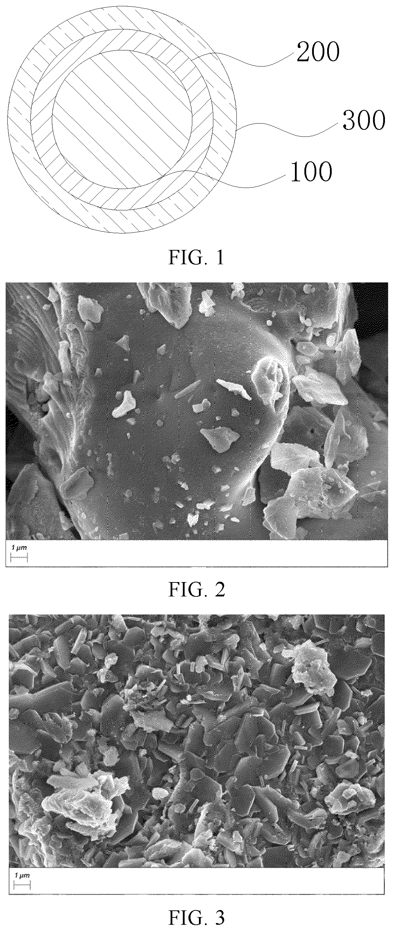

In an aspect of the present disclosure, the present disclosure provides a positive lithium supplement material. With reference to FIG. 1, the positive lithium supplement material includes a core 100, an inorganic coating layer 200, and an organic coating layer 300. The core 100 includes LiₓM_{y}O_{z}, and the M element includes at least one of Al, Ti, V, Cr, Mn, Fe, Co, Ni, Cu, or Zn, where 2 ≤ x ≤ 6, 1 ≤ y ≤ 2, 2 ≤ z ≤ 4. The core is electric neutrality. The inorganic coating layer 200 coats at least part of a surface of the core 100. The organic coating layer 300 coats at least part of a surface of the inorganic coating layer 200 away from the core 100. The core is coated with inorganic and organic components, such that the structural stability of the positive lithium supplement material can be significantly improved, and thus the positive lithium supplement material has a high hydrophobic property. The material structure and the lithium supplement capacity can be maintained for more than 7 days at the ambient temperature and humidity. The production and use cycle requirements of the positive lithium supplement material can be satisfied. Significant results are achieved in supplementing an active lithium source of the cell, increasing the cell energy density, and cycling performance.

In order to facilitate understanding, the principle of the positive lithium supplement material of the present disclosure having the above beneficial effects will be described as follows:

The inventors have found that basic impurities, such as Li₂O, are easily generated during the preparation of the core, and the residual basic impurities cannot be completely removed by adjusting the ratio of raw materials. In an embodiment, when a material, such as lithium hydroxide and lithium carbonate, is used as a lithium source during the preparation of the core, lithium oxide is generated after decomposition at a high temperature. In another embodiment, when lithium oxide is directly used as a lithium source, a lithium supplement material is formed after Li₂O reacts with a metal oxide at a high temperature. Since the reaction of lithium oxide and metal oxide is a solid-solid reaction, the diffusion speed of the reaction substance during the reaction is slow, the material reaction is difficult to proceed completely, and residual alkaline substances such as Li₂O are easily formed.

The inventors have further found that during use, the core of the positive lithium supplement material is prone to react with water and carbon dioxide in the air, or to react with water and carbon dioxide in a positive electrode slurry after the positive electrode slurry is added. In this way, inert impurities such as LiOH and Li₂CO₃ may be formed on the surface of the material. Similarly, the residual alkali on the surface of the core is also prone to react with water and carbon dioxide to form inert impurities, such as LiOH and Li₂CO₃. On the one hand, the formation of inert impurities such as LiOH and Li₂CO₃ increases the alkalinity of the material, which leads to dehydrofluorination reaction of the binder, such as PVDF, during the preparation of the positive electrode slurry, and finally leads to gelation of the positive electrode slurry, decrease of the adhesion between the positive active substance layer and the positive electrode current collector, and easy to cause problems such as peeling. On the other hand, the material is affected by a surface side reaction layer, i.e., the above inert impurity layer such as LiOH and Li₂CO₃ formed by contacting the core with water and carbon dioxide. In this way, the reversible active lithium content and kinetics of the material may decrease, resulting in significant decrease in the lithium supplement capacity of the material.

After great theoretical analysis and experimental exploration, the inventors have found that the solution of reducing the occurrence of the above problems can be achieved by reducing the water content of the production environment and the use environment, which may greatly increase the production and manufacturing costs of a battery. The formation of the above inert substance layer can be effectively solved by synthesizing a positive lithium supplement material with a hydrophobic and moisture-resistant performance, and a lower production and manufacturing cost can be achieved. In an embodiment of the present disclosure, an inorganic coating layer is formed on the surface of the core. In this way, the residual alkali on the surface of the core can be consumed by the reaction between an inorganic substance and the residual alkali on the surface of the core, thereby reducing the alkaline substance that may react with water and carbon dioxide. Further, the hydrophobic property of the positive lithium supplement material can be improved, thereby reducing the contact of the core with water and carbon dioxide. An organic coating layer is formed on the surface of the inorganic coating layer on a side away from the core, such that the hydrophobicity of the positive lithium supplement material can be further improved, to reduce the contact of the core with water and carbon dioxide. Further, the formation of the inorganic coating layer and the organic coating layer can more easily form a coating layer with a complete structure and higher coating uniformity on the surface of the core. If only an inorganic coating layer is provided on a surface of positive electrode particles, the hydrophobic property of the positive lithium supplement material is inferior relative to that of the positive lithium supplement material provided with both of an inorganic coating layer and an organic coating layer. If only an organic coating layer is provided on the surface of the positive electrode particles, the hydrophobic property of the positive lithium supplement material is inferior relative to that of the positive lithium supplement material in which the inorganic coating layer and the organic coating layer are both provided, the organic coating layer is in direct contact with the core, and organics of the organic coating layer is easily damaged by the residual alkali on the surface of the core.

According to some embodiments of the present disclosure, referring to FIG. 2, the composition of the core is not particularly limited as long as the core has a relatively high lithium content. For example, the core 100 includes LiₓM_{y}O_{z}, and the M element may include at least one of Al, Ti, V, Cr, Mn, Fe, Co, Ni, Cu, or Zn, where 2 ≤ x ≤ 6, 1 ≤ y ≤ 2, 2 ≤ z ≤ 4. In particular, the core may include at least one of Li₅FeO₄, Li₆CoO₄, or Li₂NiO₂.

According to some embodiments of the present disclosure, referring to FIG. 3, the kind of the inorganic coating layer is not particularly limited. For example, the inorganic coating layer may include oxide, which may include binary oxide and/or ternary oxide. A coating layer of inorganic oxide is formed on the surface of the core, such that the core can be blocked from direct contact with water and COz, and thus the hydrophobic and moisture-resistant performance of the material can be effectively improved.

According to some embodiments of the present disclosure, the kind of binary oxide is not particularly limited. For example, binary oxide may include at least one of elements in the main group III, the main group IV, the main group V, and the main group VI of the second period, the third period, and the fourth period, and transition metal elements having n-divalent, n-trivalent, or n-tetravalent in the fourth period.

According to some embodiments of the present disclosure, the kind of binary oxide is not particularly limited. For example, the binary oxide may include at least one of boron oxide, aluminum oxide, phosphorus oxide, arsenic oxide, antimony oxide, selenium oxide, titanium oxide, chromium oxide, manganese oxide, cobalt oxide, or copper oxide. In an embodiment, binary oxide may be boron oxide.

According to some embodiments of the present disclosure, the type of binary oxide is not particularly limited. For example, the melting point of binary oxide may be not greater than 600°C. Oxide with a low melting point is coated, such that it is possible to effectively improve the coating uniformity of the material and improve the hydrophobic property of the coated material by performing molten liquid phase coating treatment at a temperature greater than the melting point of oxide.

According to some embodiments of the present disclosure, the kind of the binary oxide is not particularly limited. For example, binary oxide may include B₂O₃, P₂O₃, P₂O₅, As₂O₃, Sb₂O₃, Sb₂O₅, SeO₂, TiO₂, Cr₂O₃, MnO₂, CoO, CuO, and Al₂O₃. Binary oxide preferably includes at least one of B₂O₃, P₂O₃, P₂O₅, As₂O₃, Sb₂O₃, Sb₂O₅, or SeO₂, and more preferably, binary oxide may be B₂O₃. Since B₂O₃ has a lower melting point, B₂O₃ is easier to form liquid phase after being heated during the coating process of molten liquid phase. In this way, more uniform coating on the surface of the core can be achieved. Furthermore, the density of B₂O₃ is relatively low, such that a less coating amount can achieve a more uniform coating effect, which is beneficial to reduce decrease in gram capacity of the positive lithium supplement material caused by too many coating layers. In addition, B₂O₃ has a wide source and low cost, which is beneficial to large-scale production.

According to some embodiments of the present disclosure, when coating binary oxide on the surface of the core, residual alkaline substance exists on the surface of the core. Accordingly, during the formation of the inorganic coating layer, the hydrophobicity of the positive lithium supplement material can be increased by binary oxide, and ternary oxide containing lithium can be formed by a reaction between binary oxide and the residual alkaline substance in the core. In this way, the residual alkali on the surface of the core can be effectively consumed, and the reaction of the core with water and carbon dioxide can be reduced to avoid forming an inert impurity layer. The specific kind of ternary oxide is not particularly limited. For example, ternary oxide is lithium-containing oxide, and lithium-containing oxide may include at least one of elements in the main group III, the main group IV, the main group V, and the main group VI of the second period, the third period, and the fourth period, and transition metal elements having n-divalent, n-trivalent, or n-tetravalent in the fourth period. The hydrophobicity of ternary oxide in the inorganic coating layer is superior to that of the core, such that the residual alkali on the surface of the core can be consumed, and the hydrophobic property of the positive lithium supplement material can be further improved.

According to some embodiments of the present disclosure, the kind of ternary oxide is not particularly limited. For example, ternary oxide may include at least one of lithium boron oxide, lithium phosphorus oxide, lithium arsenic oxide, lithium titanium oxide, lithium chromium oxide, manganese oxide, lithium cobalt oxide, lithium copper oxide, or lithium. In particular, ternary oxide may include Li₃BO₃, LiPO₃, Li₃PO₄, Li₃AsO₄, Li₄Ti₅O₁₂, LiCrO₂, LiMnO₂, LiCoO₂, and LiCuO₂. Preferably, ternary oxide may be Li₃BO₃.

According to some embodiments of the present disclosure, a mass fraction of the inorganic coating layer in the positive lithium supplement material is not particularly limited. For example, the mass fraction of the inorganic coating layer in the positive lithium supplement material may be in a range of 0.5 wt% to 10 wt%. Preferably, the mass fraction of the inorganic coating layer in the positive lithium supplement material may be in a range of 1 wt% to 3 wt%. When the mass fraction of the inorganic coating layer in the positive lithium supplement material is smaller than 0.5 wt%, it is difficult for the inorganic coating layer to completely cover the surface of the core, resulting in poor moisture resistance of the positive lithium supplement material. When the mass fraction of the inorganic coating layer is greater than 10 wt%, the proportion of inert binary oxide in the positive lithium supplement material is great, such that the lithium supplement capacity of the positive lithium supplement material decreases significantly, and too much inorganic coating layers may hinder transmission of lithium ions to a certain extent, thereby further deteriorating the lithium supplement capacity of the positive lithium supplement material.

According to some embodiments of the present disclosure, a mass fraction of ternary oxide in the inorganic coating layer is not particularly limited. For example, the mass fraction of ternary oxide in the inorganic coating layer may be in a range of 5 wt% to 50 wt%. The hydrophobic property of ternary oxide in the inorganic coating layer is superior to that of the core, and is slightly lower than that of binary oxide. When the mass fraction of ternary oxide in the inorganic coating layer is smaller than 5 wt%, the residual alkali on the surface of the core cannot be completely consumed, and there is a greater risk of forming an inert impurity layer. When the mass fraction of ternary oxide in the inorganic coating layer is greater than 50 wt%, the residual alkali on the surface of the core has been completely consumed, and too much ternary oxide in the inorganic coating layer may lead to decrease in the hydrophobic property of the positive lithium supplement material.

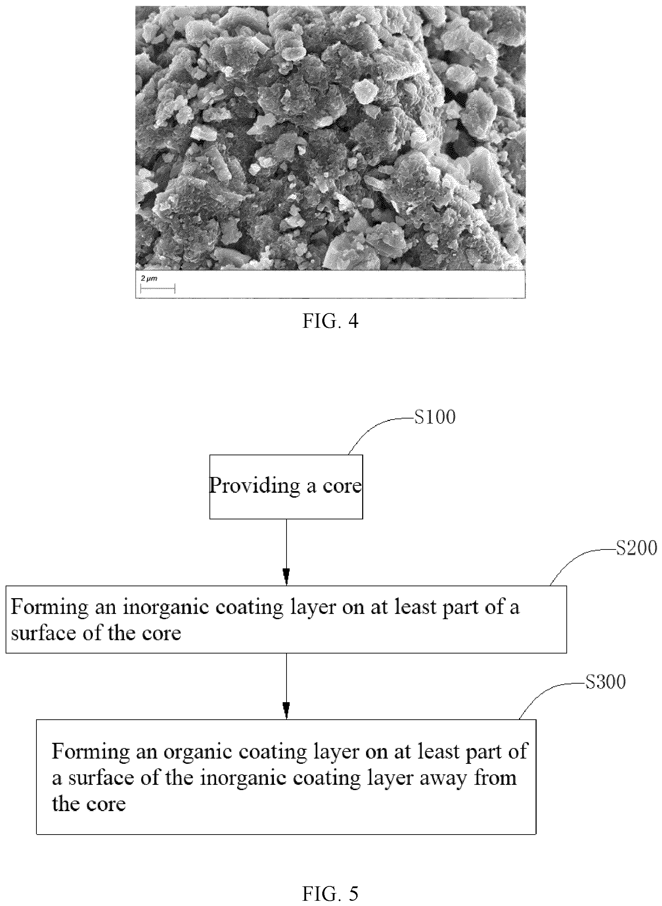

According to some embodiments of the present disclosure, referring to FIG. 4, the kind of the organic coating layer is not particularly limited. For example, the organic coating layer may include organic polymer, and the organic polymer may include at least one of polytetrafluoroethylene, polyethylene, polypropylene, polystyrene, amino-polystyrene, ethylene-vinyl acetate copolymer, polydimethylsiloxane and derivatives thereof, epoxy resin, polyacrylonitrile, polyvinylpyrrolidone, or alkylsilane and derivatives thereof. Further, the polydimethylsiloxane derivative may include at least one of polydimethylsiloxane, cyclomethicone, aminosiloxane, polymethylphenyl siloxane, or polyether polysiloxane copolymer. When the organic coating layer includes the above organic polymer, the above organic polymer materials all have a better hydrophobic property. In this way, the positive lithium supplement material can have a superior moisture resistance by coating an organic coating layer of organic polymer on an outer surface of the positive lithium supplement material. Preferably, organic polymer can be polydimethylsiloxane and derivatives thereof, which have a good hydrophobic property, low cost, and a prospect of large-scale application.

According to some embodiments of the present disclosure, the composition of the organic coating layer is not particularly limited. For example, the organic coating layer may further include a conductive material in order to improve the conductivity of the positive lithium supplement material. A conductive material is added in the organic coating layer, such that the overall conductivity of the positive lithium supplement material can be effectively improved, and the capacity and rate capability of the coated material can be improved.

According to some embodiments of the present disclosure, the kind of the conductive material is not particularly limited. For example, the conductive material may include a conductive carbon material, which may include at least one of conductive carbon black (SuperP), single-walled carbon nanotubes, multi-walled carbon nanotubes, fullerenes, or graphene.

According to some embodiments of the present disclosure, the mass fraction of the organic coating layer in the positive lithium supplement material is not particularly limited. For example, the mass fraction of the organic coating layer in the positive lithium supplement material may range from 0.5 wt% to 10 wt%. Preferably, the mass fraction of the organic coating layer in the positive lithium supplement material may range from 1 wt% to 3 wt%. When the mass fraction of the organic coating layer in the positive lithium supplement material is smaller than 0.5 wt%, it is difficult for the organic coating layer to completely cover the surface of the positive lithium supplement material, and the moisture resistance of the positive lithium supplement material is poor. When the mass fraction of the organic coating layer is greater than 10 wt%, the lithium supplement capacity of the positive lithium supplement material decreases obviously, and the organic coating layer hinders the transmission of lithium ions to a certain extent, such that the dynamic performance of the positive lithium supplement material is poor and the lithium supplement capacity of the positive lithium supplement material is further deteriorated.

According to some embodiments of the present disclosure, a median particle diameter of the core is not particularly limited. For example, the median particle diameter of the core may range from 5 µm to 20 µm. When the median particle size of the core is smaller than 5 µm, the particle diameter of the core is too small and thus tends to agglomerate during the coating process, which is not conducive to the formation of a uniform coating layer on the surface of the core, and the hydrophobic and moisture-resistant performance of the positive lithium supplement material is poor. When the median particle diameter of the core is greater than 20 µm, the particle diameter of the core is too large, which is not conducive to delithiation. Accordingly, the kinetic performance is poor, and the lithium supplement capacity is low, so the effect of the positive lithium supplement material cannot be exerted well.

According to some embodiments of the present disclosure, a thickness of the inorganic coating layer is not particularly limited. For example, the thickness of the inorganic coating layer may be in a range of 5 nm to 50 nm. When the thickness of the inorganic coating layer is 5 nm, it is difficult for the inorganic coating layer to completely cover the surface of the core, and the moisture resistance of the positive lithium supplement material is poor. When the thickness of the inorganic coating layer is greater than 50 nm, the proportion of inert binary oxide in the positive lithium supplement material is high, and the lithium supplement capacity of the material decreases significantly. Further, too much inorganic coating layers may hinder the transport of lithium ions to a certain extent, thereby further deteriorating the lithium supplement capacity of the positive lithium supplement material.

According to some embodiments of the present disclosure, a thickness of the organic coating layer is not particularly limited. For example, the thickness of the organic coating layer may be in a range of 5 nm to 50 nm. When the thickness of the organic coating layer is smaller than 5 nm, it is difficult for the organic coating layer to completely cover the surface of the positive lithium supplement material, and the moisture resistance of the positive lithium supplement material is poor. When the thickness of the organic coating layer is greater than 50 nm, the lithium supplement capacity of the positive lithium supplement material decreases obviously. Further, the organic coating layer may hinder the transport of lithium ions to some extent, such that the dynamic performance of the positive lithium supplement material is poor and the lithium supplement capacity of the positive lithium supplement material is further deteriorated.

In the description of the present disclosure, it is to be understood that the terms "thickness" and the like refer to an orientation or positional relationship based on the orientation or positional relationship shown in the drawings for ease of description and simplicity of description only and do not indicate or imply that the device or element referred to must have a particular orientation, be constructed and operated in a particular orientation and therefore should not be construed as limiting the present disclosure.

In another aspect of the present disclosure, the present disclosure provides a method of preparing a positive lithium supplement material, which can simply prepare a positive lithium supplement material with superior structural stability, and satisfy the production and use cycle requirements of the positive lithium supplement material. Significant results are achieved in supplementing an active lithium source of the cell, increasing the energy density of the cell, and cycle performance. Specifically, referring to FIG. 5, a method of preparing a positive lithium supplement material includes steps of: S 100, providing a core; S200, forming an inorganic coating layer on at least part of a surface of the core; and S300, forming an organic coating layer on at least part of a surface of the inorganic coating layer away from the core.

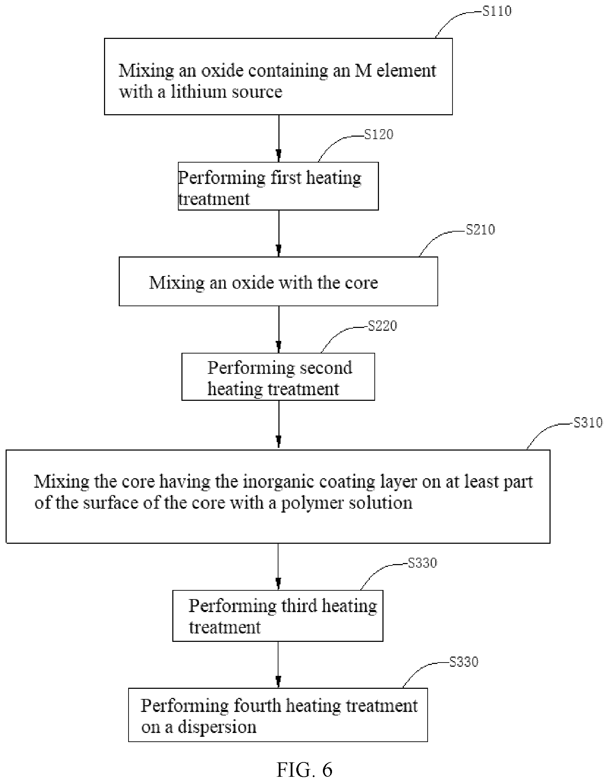

According to some embodiments of the present disclosure, a core of LiₓM_{y}O_{z} is provided at S100. In particular, with reference to FIG. 6, the providing a core may steps of: S 110, mixing oxide containing an M element with a lithium source; and S 120, performing first heating treatment.

According to some embodiments of the present disclosure, the kind of the M element is not particularly limited. For example, the M element may include at least one of Al, Ti, V, Cr, Mn, Fe, Co, Ni, Cu, or Zn.

According to some embodiments of the present disclosure, the kind of the lithium source is not particularly limited. For example, the lithium source may include at least one of lithium hydroxide, lithium oxide, lithium acetate, lithium carbonate, lithium nitrate, or lithium oxalate.

According to some embodiments of the present disclosure, an amount ratio of the lithium source to oxide of the M element is not particularly limited. For example, a sum of the total moles of the lithium element of the lithium source used in the mixing process is a, a total number of moles of the M element of the M element-containing oxide used in the mixing process is b, a ratio of a to b is m, and a ratio of x to y in the core of LiₓM_{y}O_{z} is n. When a ratio of a difference between m and n to n is c, c may be in a range of 0-50%, thereby facilitating the formation of the inorganic coating layer containing ternary lithium-containing oxide. Specifically, 2 ≤ x ≤ 6, 1 ≤ y ≤ 2, and 2 ≤ z ≤ 4.

According to some embodiments of the present disclosure, the process of mixing M element-containing oxide with the lithium source is not particularly limited. For example, the mixing treatment may be ball-milling mixture. In an embodiment, a rotational speed of the ball-milling mixture is in a range of 200 rpm to 600 rpm, and a duration of the ball-milling mixture is in a range of 2 h to 12 h. When the speed and duration of the ball milling treatment are within the above ranges, it is possible to effectively improve the mixing uniformity of the raw materials, promote the formation of a new phase of the core, and minimize the residue of alkaline impurities, such as lithium oxide.

According to some embodiments of the present disclosure, M element-containing oxide is sufficiently reacted with the lithium source through the first heating treatment of S 120 to obtain LiₓM_{y}O_{z}.

According to some embodiments of the present disclosure, the temperature and time of the first heating treatment are not particularly limited. For example, the temperature of the first heating treatment may be in a range of 400°C to 900°C, and a duration of the first heating treatment may be in a range of 6 h to 48 h. When the temperature and duration of the first heating treatment are within the above ranges, it is possible to effectively improve the mixing uniformity of the raw materials, promote the sufficient formation of a new phase of the core, and minimize the residue of basic impurities, such as lithium oxide.

According to some embodiments of the present disclosure, an inorganic coating layer is formed on the surface of the core in S200. In an embodiment, referring to FIG. 6, the forming the inorganic coating layer on at least part of the surface of the core further includes steps of: S210, mixing oxide and the core; and S220, performing second heating treatment.

According to some embodiments of the present disclosure, the kind of oxide is not particularly limited, for example, oxide that is mixed with the core may only include binary oxide. Specifically, in a case where only binary oxide is added for mixing, in the process of forming the inorganic coating layer, the core and a part of remaining alkaline substances such as lithium oxide form lithium-containing ternary oxide in-situ with binary oxide after high-temperature heat treatment, such that the inorganic coating layer includes both of binary oxide and lithium-containing ternary oxide. On the one hand, the remaining lithium oxide in the core can be consumed by the inorganic coating layer, to greatly reduce the alkalinity of the positive lithium supplement material, and prevent the positive lithium supplement material from contacting with water and carbon dioxide during a stirring process of a positive electrode slurry which may generate gel. On the other hand, lithium-containing ternary oxide formed in-situ can function to prevent the core with high activity from directly contacting with water and carbon dioxide in the air, to improve the hydrophobic property of the positive lithium supplement material. Further, lithium-containing ternary oxide can function to improve the lithium-ion transport of the positive lithium supplement material, to improve the dynamic property of the coated positive lithium supplement material.

According to some embodiments of the present disclosure, the kind of binary oxide is not particularly limited. For example, binary oxide may include at least one of B₂O₃, P₂O₃, P₂O₅, As₂O₃, Sb₂O₃, Sb₂O₅, SeO₂, TiO₂, Cr₂O₃, MnO₂, CoO, CuO, or Al₂O₃.

According to some embodiments of the present disclosure, the process of mixing oxide with the core is not particularly limited, for example, the mixing process may be ball-milling mixture.

According to some embodiments of the present disclosure, the core is coated with oxide through the second heating treatment at S220, to obtain a core of which a surface is partially coated with an inorganic coating layer.

According to some embodiments of the present disclosure, a temperature of the second heating treatment is not particularly limited. For example, when the oxide includes only one binary oxide, the temperature of the second heating treatment may be not lower than the melting point of the binary oxide. In an embodiment, a difference between the temperature of the second heating treatment and the melting point of the binary oxide is in a range of 0°C to 100°C. The temperature of the second heating treatment is increased to be higher than the melting point of the coated oxide so that particles of the core can be in liquid phase binary oxide, which is beneficial to form a more uniform inorganic coating layer. Furthermore, in the high-temperature heat treatment, oxide reacts with the core and part of residual alkaline substances such as lithium oxide to form lithium-containing ternary oxide, which is uniformly coated on the surface of the core, to be beneficial to improving the ion conduction capacity of the positive lithium supplement material after inorganic coating and removing the problem of slurry gel during processing caused by residual alkaline substances such as lithium oxide.

According to some embodiments of the present disclosure, the temperature of the second heating treatment is not particularly limited. For example, when the oxide includes a plurality of binary oxides, the temperature of the second heating treatment may be not lower than the melting point of at least one of the plurality of binary oxides. The temperature of the second heating treatment is increased to be higher than the melting point of the coated oxide so that particles of the core can be in liquid phase binary oxide, which is beneficial to form a more uniform inorganic coating layer. Furthermore, in the high-temperature heat treatment, oxide reacts with the core and part of residual alkaline substances such as lithium oxide to form lithium-containing ternary oxide, which is uniformly coated on the surface of the core, to be beneficial to improving the ion conduction capacity of the positive lithium supplement material after inorganic coating and removing the problem of slurry gel during processing caused by residual alkaline substances such as lithium oxide.

In the description of the present disclosure, "a plurality of" includes two or more.

According to some embodiments of the present disclosure, a duration of the second heating treatment is not particularly limited, for example, the duration of the second heating treatment may range from 2 h to 12 h. When the duration of the second heating treatment is less than 2 h, the material reaction is insufficient, and the inorganic coating layer cannot be uniformly coated. When the duration of the second heating treatment is greater than 12 h, the binary oxide in liquid phase is gradually vaporized under protective atmosphere, such that the content of the inorganic coating layer is too low, the moisture resistance of the positive lithium supplement material decreases, the energy consumption is relatively higher, and the production efficiency is reduced.

According to some embodiments of the present disclosure, at S300, the organic coating layer is formed on at least part of the surface of the inorganic coating layer away from the core to obtain the positive lithium supplement material. Specifically, referring to FIG. 6, the forming the inorganic coating layer on at least part of the surface of the inorganic coating layer away from the core further includes steps of: S310, mixing a polymer solution with a core of which a surface is partially coated with an inorganic coating layer; S320, performing third heating treatment; and S330, performing fourth heating treatment on a dispersion.

According to some embodiments of the present disclosure, the kind of polymer in the polymer solution is not particularly limited. For example, the polymer may include at least one of polytetrafluoroethylene micropowder, polyethylene micropowder, polypropylene micropowder, polystyrene micropowder, amino-polystyrene micropowder, ethylene-vinyl acetate copolymer, polydimethylsiloxane and derivatives thereof, epoxy resin, polyacrylonitrile, polyvinylpyrrolidone, or alkylsilane and derivatives thereof. Further, the polydimethylsiloxane derivative may include at least one of polydimethylsiloxane, cyclomethicone, aminosiloxane, polymethylphenyl siloxane, or polyether polysiloxane copolymer. When the polymer solution contains the above polymer, the above organic polymer materials all have a better hydrophobic property, such that the positive lithium supplement material have a superior moisture resistance by coating an organic coating layer of organic polymer on the outer surface of the positive lithium supplement material. Preferably, the organic polymer is polydimethylsiloxane and derivatives thereof, and the polydimethylsiloxane and derivatives thereof have a good hydrophobic property, low cost, and a prospect of large-scale application.

According to some embodiments of the present disclosure, the composition of the polymer solution is not particularly limited. For example, in order to increase the electrical conductivity of the positive lithium supplement material, the polymer solution may further include a conductive carbon material, which may include at least one of conductive carbon black, single-walled carbon nanotubes, multi-walled carbon nanotubes, fullerenes, or graphene. Conductive materials are added into the polymer solution, such that the overall conductivity of the positive lithium supplement material can be effectively improved, and the capacity and rate capability of the coated material can be improved.

According to some embodiments of the present disclosure, a solvent of the polymer solution is not particularly limited. For example, the solvent of the polymer solution may include at least one of N-methylpyrrolidone, N, N-dimethylformamide, acetonitrile, acetone, tetrahydrofuran, isopropanol, n-hexane, cyclohexane, or ethylene glycol diethyl ether. Further, in order to reduce the influence of water on the positive lithium supplement material, the solvent of the polymer solution should be subjected to water removal treatment before being used for dispersing the polymer.

According to some embodiments of the present disclosure, the method for preparing the polymer solution is not particularly limited. For example, the conductive material and the polymer powder may be simultaneously added to the solvent to be stirred and dispersed until they are uniformly mixed.

According to some embodiments of the present disclosure, the polymer solution containing the core that is coated with the inorganic coating layer on part of a surface thereof is subjected to the third heating treatment at S320, to remove the solvent from the polymer solution to obtain a dispersion.

According to some embodiments of the present disclosure, the temperature of the third heating treatment is not particularly limited as long as the solvent component in the polymer solution can be removed by the third heating treatment to uniformly distribute the polymer to be coated on the surface of the particles. For example, the temperature of the third heating treatment may range from 50°C to 150°C.

According to some embodiments of the present disclosure, the dispersion is subjected to the fourth heating treatment at S330, to obtain a final lithium supplement material. The fourth heating treatment is performed in a region close to the melting point of the polymer material, such that the combination of the polymer material and the particles can be promoted, thereby improving the coating uniformity of the organic coating layer.

According to some embodiments of the present disclosure, the temperature of the fourth heating treatment may be smaller than the melting point of the polymer. In an embodiment, a difference between the temperature of the fourth heat treatment and the melting point of the polymer may be in a range of -50°C to 0°C. Further, the temperature of the fourth heating treatment may be in a range of 200°C to 400°C, and/or a duration of the fourth heating treatment may be in a range of 1 h to 6 h. When the temperature of the fourth heating treatment is too low and/or the duration is too short, a coating bonding force of the polymer is poor, and the coating uniformity of the organic coating layer is poor, resulting in decrease in the hydrophobic property of the positive lithium supplement material. When the temperature of the fourth heating treatment is too high and/or the duration is too long, agglomeration or adhesion tends to occur among the positive lithium supplement materials. If the positive lithium supplement materials are separated by crushing treatment, the organic coating layer and the inorganic coating layer are damaged, such that the coating fails.

It is to be understood that the fourth heating treatment is mainly aimed at solidifying the polymer on the surface of the particles to form the organic coating layer. When the difference between the temperature of the fourth heating treatment and the melting point of the polymer is small or slightly higher than the melting point of the polymer, or the duration of the fourth heating treatment is too long, the fourth heating treatment can still solidify the polymer on the surface of the particles to form the organic coating layer. In this case, a structure in which carbonization partially occurs may exist in the organic coating layer.

In the description of the present disclosure, "a first feature" and "a second feature" may include one or more of the features.

In yet another aspect of the present disclosure, the present disclosure provides a positive electrode plate that includes a positive electrode current collector and a positive active substance layer. The positive active substance layer includes the above positive lithium supplement material and/or the positive lithium supplement material prepared by the above method. Thus, the positive electrode plate has all the features and advantages of the above positive lithium supplement material and/or the above method, which will not be described in detail herein.

In the description of the present disclosure, "A and/or B" may include any of the case of A alone, the case of B alone, and the cases of A and B. A and B are merely examples, which may be any technical feature of the present disclosure that relates to "and/or".

In yet another aspect of the present disclosure, the present disclosure provides a secondary battery including a positive electrode plate, and the positive electrode plate is the positive electrode plate as described above. Accordingly, the secondary battery has all the features and advantages of the positive electrode plate as described above, and will not be described in detail herein.

According to some embodiments of the present disclosure, the secondary battery may include at least one of a battery cell, a battery module, and a battery pack.

In yet another aspect of the present disclosure, the present disclosure proposes an electrical device including the secondary battery described above. Thus, the electrical device has all the features and advantages of the secondary battery as described above, and will not be described in detail herein.

According to some embodiments of the present disclosure, the electrical device may include a vehicle. According to further embodiments of the present disclosure, the vehicle further includes a vehicle chassis and a vehicle body provided in an upper portion of the vehicle chassis. The electrical device satisfies at least one of disposing the electrical device on a side of the vehicle chassis close to the vehicle body, disposing the electrical device on a side of the vehicle chassis away from the vehicle body, or providing the electrical device in the vehicle chassis.

The solutions of the present disclosure are illustrated by the following specific examples, which are to be construed as merely illustrative of the present disclosure and are not to be construed as limiting the scope of the present disclosure. Where specific techniques or conditions are not specified in the examples, they are performed based on techniques or conditions described in the literature in the art or based on the product specification. The used reagents or instruments are conventional products that can be obtained commercially without indicating the manufacturer.

### Example 1

### 1. Providing a core, in which the Li₅FeO₄ core was synthesized from LiOH and Fe₂O₃.

The operation is described as follows. LiOH of 124.59 g was mixed uniformly with Fe₂O₃ of 80.00 g by a horizontal ball mill, in which a rotational speed of the horizontal ball mill was 300 rpm and a duration for ball milling was 4h. After mixing, a powder was placed in a box furnace containing N₂ atmosphere for first heating treatment. A first heating treatment temperature was 450°C, and a first heating treatment duration was 4h. After removing the materials, the materials were ball-milled for 4h by the ball mill at a rotational speed of 300 rpm, to be mixed uniformly and then sintered at 900°C for 24h, and finally the Li₅FeO₄ core was obtained.

### 2. Forming an inorganic coating layer on the surface of the core

The prepared Li₅FeO₄ powder and B₂O₃ powder of 3.5 g were mixed uniformly by ball milling, in which a rotational speed of the ball mill was 300 rpm and a duration for ball milling was 4h. After mixing, a powder was placed in a box furnace containing N₂ atmosphere for second heating treatment. A second heating treatment temperature was 450°C, and a second heating treatment duration was 4h. A part of B₂O₃ reacts with Li₅FeO₄ and the remaining Li₂O in situ to form Li₃BO₃. The obtained inorganic coating layer includes B₂O₃ and Li₃BO₃, and was recorded as a B₂O₃/Li₃BO₃ coated Li₅FeO₄ material.

### 3. Forming an organic coating layer on the surface of the inorganic coating layer away from the core

The B₂O₃/Li₃BO₃ coated Li₅FeO₄ material and polyacrylonitrile (PAN) of 4.08 g were added into an N, N-dimethylformamide (DMF) solution of 50 mL, and were stirred for 30 min to be dispersed uniformly. The uniformly dispersed suspension was placed into a vacuum oven for third heating treatment to remove the DMF solvent, and the third heating treatment was performed under vacuum conditions. A third heating treatment temperature was 100°C, and a third heating treatment duration was 2 h. Dried powder obtained by the third heating treatment was placed in the box furnace containing N₂ atmosphere for fourth heating treatment, to fuse and solidify PAN on the surface of the material. A fourth heating treatment temperature was 200°C, and a fourth heating treatment duration was 2 h. After the fourth heating treatment, a positive lithium supplement material was obtained. A core of the positive lithium supplement material was Li₅FeO₄, an inorganic coating layer of the positive lithium supplement material was a mixture of B₂O₃ and Li₃BO₃, and an organic coating layer of the positive lithium supplement material was polyacrylonitrile.

### Example 2

Example 2 was identical to Example 1, except that LiOH was added in an amount of 123.90 g, B₂O₃ was added in an amount of 1.05 g, and PAN was added in an amount of 1.26 g.

### Example 3

Example 3 was identical to Example 1, except that LiOH was added in an amount of 124.98 g, B₂O₃ was added in an amount of 4.97 g, and PAN was added in an amount of 5.83 g.

### Example 4

Example 4 was identical to Example 1, except that LiOH was added in an amount of 124 g, B₂O₃ was added in an amount of 1.4 g, and PAN was added in an amount of 6.53 g.

### Example 5

Example 5 was identical to Example 1, except that LiOH was added in an amount of 125.18 g, B₂O₃ was added in an amount of 5.60 g, and PAN was added in an amount of 1.63 g.

### Example 6

Example 6 was identical to Example 1, except that LiOH was added in an amount of 123.85 g, B₂O₃ was added in an amount of 3.85 g, and PAN was added in an amount of 4.08 g.

### Example 7

Example 7 was identical to Example 1, except that LiOH was added in an amount of 125.73 g, B₂O₃ was added in an amount of 3.50 g, and PAN was added in an amount of 4.10 g.

### Comparative Example 1

Comparative Example 1 was identical to Example 1, except that the B₂O₃ coating and the PAN coating were not performed.

### Comparative Example 2

Comparative Example 2 was identical to Example 1, except that LiOH was added in an amount of 125.58 g, B₂O₃ was added in an amount of 7 g, and the PAN coating was not performed.

### Comparative Example 3

Comparative Example 3 is identical to Example 1, except that LiOH was added in an amount of 123.60 g, the B₂O₃ coating was not performed, and the PAN coating was performed directly, wherein the PAN was added in an amount of 9.16 g.

### Comparative Example 4

Comparative Example 4 was identical to Example 1, except that Li₅FeO₄ and B₂O₃ were uniformly mixed by ball milling at a mass ratio of 95:2.5, and were then added to a DMF solution containing PAN to be stirred and dispersed, dried, and heated.

### Comparative Example 5

Comparative Example 5 was identical to Example 1, except that LiOH was added in an amount of 123.67g, B₂O₃ was added in an amount of 3.99g, and PAN was added in an amount of 4.08g.

### Comparative Example 6

Comparative Example 6 was identical to Example 1, except that LiOH was added in an amount of 126.07 g, B₂O₃ was added in an amount of 2.52 g, and PAN was added in an amount of 4.08 g.

### Comparative Example 7

Comparative Example 7 was identical to Example 1, except that LiOH was added in an amount of 123.76 g, B₂O₃ was added in an amount of 0.56 g, and PAN was added in an amount of 3.99 g.

### Comparative Example 8

Comparative Example 8 was identical to Example 1, except that LiOH was added in an amount of 129.29 g, B₂O₃ was added in an amount of 20.30 g, and PAN was added in an amount of 4.58 g.

### Comparative Example 9

Comparative Example 9 was identical to Example 1, except that LiOH was added in an amount of 124.54 g, B₂O₃ was added in an amount of 3.36 g, and PAN was added in an amount of 0.64 g.

### Comparative Example 10

Comparative Example 10 was identical to Example 1, except that LiOH was added in an amount of 124.66 g, B₂O₃ was added in an amount of 3.78 g, and PAN was added in an amount of 20.31 g.

### Comparative Example 11

Comparative Example 11 is identical to Example 1, except that the second heating treatment temperature at Step 2 was 300°C.

### Comparative Example 12

Comparative Example 12 is identical to Example 1, except that the second heating treatment duration at Step 2 was 1 h.

### Comparative Example 13

Comparative Example 13 is identical to Example 1, except that the second heating treatment duration at Step 2 was 15 h.

### Comparative Example 14

Comparative Example 14 is identical to Example 1, except that the fourth heating treatment duration was 0.5 h.

### Comparative Example 15

Comparative Example 15 is identical to Example 1, except that the fourth heating treatment duration was 8 h.

The positive lithium supplement materials of Examples 1 to 7 and Comparative Examples 1 to 15 were tested by testing methods as follows.

### (1) XRD Testing

The phase of Li₅FeO₄ was identified and it is determined whether Li₃BO₃ phase was included by measuring the XRD of the positive lithium supplement material and comparing the XRD with a material standard card. The content ratio of Li₅FeO₄ to Li₃BO₃ was determined by XRD refinement.

### (2) Content Analysis of Inorganic Coating Layer

ICP was used to test a content of Li/FeB in the positive lithium supplement material, and a coating proportion corresponding to the inorganic coating layer (including Li₃BO₃ and B₂O₃) was then obtained according to a stoichiometric ratio (Li₅FeO₄/Li₃BO₃B₂O₃).

### (3) Content Analysis of Organic Coating Layer

A content of PAN was obtained by performing a TG test on the positive lithium supplement material, and the weight loss occurring below 400°C was taken as the content of PAN.

### (4) Test Method for Moisture Absorption Weight Gain Rate of Powder

The powder of the positive lithium supplement material was stored in an environment with a humidity. The masses of the positive lithium supplement material before and after storage were measured, and a weight gain rate is calculated. Specifically, 5 g of the finished powder positive lithium supplement material was weighed and spread evenly on a weighing paper of 10 cm × 10 cm, and was placed at environment with a temperature of 25°C and a humidity of 75% for 72 hours. At the end of storage, the weight of the powder after moisture absorption was weighed again. The moisture absorption weight gain rate of the positive lithium supplement material was calculated according to the following formula: moisture absorption weight gain rate = (weight of powder after moisture absorption/5-1) × 100%.

### (5) Test for Lithium Supplement Gram Capacity

The positive lithium supplement material, a conductive agent and a binder were prepared into a positive electrode plate. The positive electrode plate was then assembled with a lithium sheet into a button battery for a first charge test, to evaluate the lithium supplement capacity of the positive lithium supplement material. Specifically, the positive lithium supplement material was dosed with Super P and PVDF (polyvinylidene fluoride) at a mass ratio of 80:10:10, which were mixed uniformly in a NMP (N-methyl pyrrolidone) solvent and then coated on a surface of Al foil with a scraper. After that, they were placed in an air-blowing oven of 120°C for drying. The positive electrode plate was then placed in a rolling machine for compaction, and the electrode plate was die-cut into small circular pieces with a diameter of 14 mm, to obtain an electrode plate for the button cell. The small circular piece of the electrode plate and empty aluminum foil were weighed by a balance, to calculate an active substance weight of the electrode plate. The electrode plate was baked at 120°C under vacuum for 12 h, and was then transferred to a glove box filled with Ar atmosphere, to be assembled with an Li sheet into a button half-cell. Celgard 2300 was selected as a separator, and the electrolytic solution was a solution that was formed by dissolving 1 M of LiPF₆ in EC (ethylene carbonate)/EMC (methyl ethyl carbonate) at a volume ratio of 3:7. The button cell was tested for charging by Wuhan Land Battery Test System, in which the charging current density was 70 mA/g (0.1C rate, 1C = 700 mAh/g), and the charging cut-off voltage was 4.5 V After reaching 4.5 V, the cell was charged to 50 uA at a constant voltage, and the value of charging capacity was recorded. The lithium supplement gram capacity of the positive lithium supplement material = (charge capacity)/(active material mass), the mass of active material = (weight of the small circular piece - weight of the empty aluminum foil) × 0.8.

### (6) Rate Performance Test

Charge-discharge tests of button cells at high current densities were performed to evaluate the rate capability of the materials. The current density was set to 231 mA/g (0.33 C), and the charge cut-off voltage was 4.5 V After reaching 4.5 V, the cell was charged to 50 uA at a constant voltage, and the value of charge capacity was recorded. Capacity retention of material at 0.33 C = (capacity of button cell at 0.33 C)/(capacity of button cell at 0.1 C) × 100%.

### (7) Moisture Resistance Test

The positive lithium supplement material was placed and stored in a constant temperature and humidity box, and a lithium supplement capacity test was performed on the stored positive lithium supplement material. The moisture resistance of the positive lithium supplement material was evaluated by comparing the lithium supplement capacity retention rates of the positive lithium supplement material before and after storage. The storage temperature was 25°C, the humidity was 75%, and the storage durations were 3 days and 7 days, respectively. The retention rate of lithium supplement capacity = (gram capacity of first discharge of material after storage)/(gram capacity of first discharge of material before storage × 100%). The test results are shown in Tables 1 and 2.

**Table 1**

| | Mass Fraction of Inorganic Coating Layer in Positive Lithium Supplement Material | Mass Fraction of Ternary Oxide in Inorganic Coating Layer | Mass Fraction of Organic Coating Layer in Positive Lithium Suppleme nt Material | Lithium Suppleme nt Gram Capacity of Positive Lithium Suppleme nt Material | Retention Rate of Lithium Suppleme nt Gram Capacity of Positive Lithium Suppleme nt Material after Storage for 3 Days | Retention Rate of Lithium Supplement Gram Capacity of Positive Lithium Supplement Material after Storage for 7 Days | Moisture Absorptio n Weight Gain of Positive Lithium Suppleme nt Material Powder | Retentio n Rate of Gram Capacity of Positive Lithium Supplem ent Material at 0.33 C |
|---|---|---|---|---|---|---|---|---|
| Example 1 | 2.5% | 26% | 2.5% | 644 | 98.3% | 95.3% | 0.43% | 95.4% |
| Example 2 | 0.80% | 26% | 0.80% | 656 | 86.4% | 81.7% | 3.45% | 96.3% |
| Example 3 | 3.50% | 26% | 3.50% | 584 | 98.2% | 95.2% | 0.55% | 85.3% |
| Example 4 | 1% | 26% | 4% | 625 | 97.5% | 92.1% | 0.72% | 93.7% |
| Example 5 | 4% | 26% | 1% | 638 | 95.1% | 89.4% | 1.03% | 92.4% |
| Example 6 | 2.5% | 7% | 2.5% | 635 | 97.0% | 94.6% | 0.81% | 90.2% |
| Example 7 | 2.5% | 48% | 2.5% | 659 | 96.4% | 92.3% | 0.96% | 93.5% |
| Comparative Example 1 | \ | \ | \ | 680 | 17.9% | \ | 39.52% | 98.3% |
| Comparative Example 2 | 5.0% | 26% | \ | 632 | 63.7% | 39.8% | 11.45% | 86.7% |
| Comparative Example 3 | \ | \ | 5.0% | 613 | 71.8% | 54.8% | 7.42% | 84.2% |
| Comparative Example 4 | 2.5% | 26% | 2.5% | 542 | 75.2% | 64.4% | 6.53% | 81.5% |
| Comparative Example 5 | 2.5% | 2% | 2.5% | 601 | 92.7% | 88.4% | 1.76% | 84.3% |
| Comparative Example 6 | 2.5% | 66% | 2.5% | 662 | 88.4% | 76.7% | 2.57% | 94.5% |
| Comparative Example 7 | 0.4% | 26% | 2.5% | 647 | 85.9% | 74.3% | 3.74% | 96.7% |
| Comparative Example 8 | 13.0% | 26% | 2.5% | 505 | 98.0% | 95.2% | 0.49% | 73.2% |
| Comparative Example 9 | 2.5% | 26% | 0.4% | 641 | 83.2% | 72.5% | 4.23% | 95.3% |
| Comparative Example 10 | 2.5% | 26% | 11.3% | 452 | 97.1% | 94.2% | 0.75% | 78.4% |

**Table 2**

| | Gram Capacity of Positive Lithium Supplement Material | Retention Rate of Lithium Supplement Gram Capacity of Positive Lithium Supplement Material after Storage for 3 Days | Retention Rate of Lithium Supplement Gram Capacity of Positive Lithium Supplement Material after Storage for 7 Days | Absorption Weight Gain of Positive Lithium Supplement Material Powder | Retention Rate of Gram Capacity of Positive Lithium Supplement Material at 0.33C |
|---|---|---|---|---|---|
| Example 1 | 644 | 98.3% | 95.3% | 0.43% | 95.4% |
| Comparative Example 4 | 542 | 75.2% | 64.4% | 6.53% | 81.5% |
| Comparative Example 11 | 585 | 79.5% | 68.1% | 5.78% | 83.4% |
| Comparative Example 12 | 603 | 81.4% | 70.5% | 4.86% | 84.9% |
| Comparative Example 13 | 625 | 83.6% | 72.6% | 4.18% | 88.3% |
| Comparative Example 14 | 639 | 85.4% | 75.2% | 3.55% | 93.2% |
| Comparative Example 15 | 633 | 87.3% | 78.4% | 2.89% | 94.1% |

The results show that the positive lithium supplement materials in Examples 1 to 7 have a relatively large lithium supplement gram capacity, superior hydrophobic and moisture-resistant performance, and a superior rate capability. In Comparative Example 1, the surface of the core of the positive lithium supplement material was not provided with a coating layer. Accordingly, although the positive lithium supplement material has a higher rate capability and a larger lithium supplement gram capacity, the hydrophobic and moisture-resistant performance thereof is extremely poor. Hence, the lithium supplement gram capacity decreases significantly after being stored for 3 days in a humid environment, and has completely failed after being stored for 7 days in humid environment. In Comparative Example 2, only an inorganic coating layer is provided on the surface of the core of the positive lithium supplement material, the hydrophobic and moisture-resistant performance is extremely poor, and the retention rate of lithium supplement gram capacity is only 39.8% after being stored for 7 days in humid environment. In Comparative Example 3, only an organic coating layer is provided on the surface of the core of the positive lithium supplement material, the hydrophobic and moisture-resistant performance is extremely poor, and the retention rate of lithium supplement gram capacity is only 54.8% after being stored for 7 days in humid environment. In Comparative Example 4, an inorganic coating layer and an organic coating layer were coated on the surface of the core of the positive lithium supplement material by a one-step method. In this way, the surface coating is incomplete, the positive lithium supplement material has poor moisture resistance, and residual alkaline substances on the surface of the core may decrease the electrical conductivity of the positive lithium supplement material, to have a lower gram capacity and a poor rate capability. In Comparative Example 5, ternary oxide content of the inorganic coating layer in the positive lithium supplement material is too little, and the positive lithium supplement material has a poor rate capability. In Comparative Example 6, the ternary oxide content of the inorganic coating layer in the positive lithium supplement material is too much, and the positive lithium supplement material has a poor moisture resistance. In Comparative Example 7, the content of the inorganic coating layer in the positive lithium supplement material is too little, and the positive lithium supplement material has a poor moisture resistance. In Comparative Example 8, the content of the inorganic coating layer in the positive lithium supplement material is too much, and the positive lithium supplement material has a poor rate capability. In Comparative Example 9, the content of the organic coating layer in the positive lithium supplement material is too little, and the positive lithium supplement material has a poor moisture resistance. In Comparative Example 10, the content of the organic coating layer in the positive lithium supplement material is too much, and the positive lithium supplement material has a poor rate capability. In Comparative Example 11, during the preparation of the positive lithium supplement material, the temperature of the heating treatment when forming the inorganic coating layer is too low. In this case, the residual alkaline substance on the surface of the core reduces the gram capacity of the positive lithium supplement material, the coating uniformity of the inorganic coating layer is poor, and the positive lithium supplement material has a poor moisture resistance. In Comparative Example 12, during the preparation of the positive lithium supplement material, the duration of the heating treatment when forming the inorganic coating layer is too short. In this case, the coating uniformity of the inorganic coating layer is poor, the coating reaction of oxide is incomplete, and the residual alkaline substances on the surface of the core reduces the gram capacity of the positive lithium supplement material, and the positive lithium supplement material has a poor moisture resistance. In Comparative Example 13, during the preparation of the positive lithium supplement material, the duration of the heating treatment when forming the inorganic coating layer is too long, the particle size of the positive lithium supplement material is too large, and the rate capability of the positive lithium supplement material is poor. In Comparative Example 14, during the preparation of the positive lithium supplement material, the duration of the fourth heating treatment for forming an organic coating layer is too short, the solidification of the polymer on the surface of the core particle is incomplete, the coating uniformity of the organic coating layer is poor, and the moisture resistance of the positive lithium supplement material is poor. In Comparative Example 15, during the preparation of the positive lithium supplement material, the duration of the fourth heating treatment for forming an organic coating layer is too long, the polymer is completely carbonized, and the positive lithium supplement material has poor moisture resistance.

In the present disclosure, all numbers disclosed herein are approximate values, regardless of whether the word "approximately" or "about" is used. Each numerical value may have a difference of 10% or less, or a difference that is reasonable for those skilled in the art, such as 1%, 2%, 3%, 4%, or 5%.

Unless defined otherwise, all technical and scientific terms used herein have the same meaning as commonly understood by those skilled in the art to which the present application belongs. All patents and publications referred to herein are incorporated by reference in their entirety. The terms "include" or "comprise" are used in open-ended expression, i.e. to encompass the contents specified in the present disclosure, but not to exclude other contents.

In the description of the specification, the terms "an embodiment", "another embodiment" and the like mean that a particular feature, structure, material or characteristic described in connection with the embodiments is included in at least one embodiment of the present disclosure. In this specification, schematic representations of the above terms are not necessarily directed to the same embodiment or example. Furthermore, the particular features, structures, materials or characteristics described may be combined in any suitable manner in any one or more embodiments or examples. Furthermore, combinations and combinations of the various embodiments or examples and features of the various embodiments or examples described in this specification can be made by those skilled in the art without departing from the scope of the present disclosure. In addition, it should be noted that in the present specification, the terms "first" and "second" are used for descriptive purposes only and are not to be understood as indicating or implying relative importance or implicitly indicating the number of technical features indicated.

While embodiments of the present disclosure have been shown and described, it will be understood that the above embodiments are illustrative and are not to be construed as limiting the present disclosure, and variations, modifications, substitutions and alterations in the above embodiments may be made by those skilled in the art without departing from the scope of the present disclosure.

## Claims

1. A positive lithium supplement material, comprising:
a core comprising LiₓM_{y}O_{z}, the M element comprising at least one of Al, Ti, V, Cr, Mn, Fe, Co, Ni, Cu, or Zn;
an inorganic coating layer coated on at least part of a surface of the core; and
an organic coating layer coated on at least part of a surface of the inorganic coating layer away from the core,
wherein 2 ≤ x ≤ 6, 1 ≤ y ≤ 2, 2 ≤ z ≤ 4, and the core is electric neutrality.

2. The positive lithium supplement material according to claim 1, wherein the inorganic coating layer comprises an oxide, the oxide comprising a binary oxide and/or a ternary oxide.

3. The positive lithium supplement material according to claim 2, wherein the binary oxide comprises at least one of elements in the main group III, the main group IV, the main group V, and the main group VI of the second period, the third period, and the fourth period, and transition metal elements having n-divalent, n-trivalent, or n-tetravalent in the fourth period.

4. The positive lithium supplement material according to claim 2 or 3, wherein the binary oxide comprises at least one of boron oxide, aluminum oxide, phosphorus oxide, arsenic oxide, antimony oxide, selenium oxide, titanium oxide, chromium oxide, manganese oxide, cobalt oxide, or copper oxide.

5. The positive lithium supplement material according to any one of claims 2 to 4, wherein the binary oxide has a melting point equal to or smaller than 600°C.

6. The positive lithium supplement material according to any one of claims 2 to 5, wherein the binary oxide comprises at least one of B₂O₃, P₂O₃, P₂O₅, As₂0₃, Sb₂O₃, Sb₂O₅, or SeO₂.

7. The positive lithium supplement material according to any one of claims 2 to 6, wherein the ternary oxide is a lithium-containing oxide, the lithium-containing oxide comprising at least one of elements in the main group III, the main group IV, the main group V, and the main group VI of the second period, the third period, and the fourth period, and transition metal elements having n-divalent, n-trivalent, or n-tetravalent in the fourth period.

8. The positive lithium supplement material according to any one of claims 2 to 7, wherein the ternary oxide comprises at least one of lithium boron oxide, lithium phosphorus oxide, lithium arsenic oxide, lithium titanium oxide, lithium chromium oxide, manganese oxide, lithium cobalt oxide, lithium copper oxide, or lithium.

9. The positive lithium supplement material according to any one of claims 1 to 8, wherein a mass fraction of the inorganic coating layer of the positive lithium supplement material is in a range of 0.5 wt% to 10 wt%.

10. The positive lithium supplement material according to any one of claims 2 to 9, wherein a mass fraction of the ternary oxide of the inorganic coating layer is in a range of 5 wt% to 50 wt%.

11. The positive lithium supplement material according to any one of claims 1 to 10, wherein the organic coating layer comprises an organic polymer, the organic polymer comprising at least one of polytetrafluoroethylene, polyethylene, polypropylene, polystyrene, amino-polystyrene, ethylene-vinyl acetate copolymer, polydimethylsiloxane and derivatives thereof, epoxy resin, polyacrylonitrile, polyvinylpyrrolidone, or alkylsilane and derivatives thereof.

12. The positive lithium supplement material according to claim 11, wherein the polydimethylsiloxane derivative comprises at least one of polydimethylsiloxane, cyclomethicone, aminosiloxane, polymethylphenyl siloxane, or polyether polysiloxane copolymer.

13. The positive lithium supplement material according to any one of claims 1 to 12, wherein the organic coating layer further comprises a conductive material.

14. The positive lithium supplement material according to claim 13, wherein the conductive material comprises a conductive carbon material, the conductive carbon material comprising at least one of conductive carbon black, single-walled carbon nanotubes, multi-walled carbon nanotubes, fullerenes, or graphene.

15. The positive lithium supplement material according to any one of claims 1 to 14, wherein a mass fraction of the organic coating layer of the positive lithium supplement material is in a range of 0.5 wt% to 10 wt%.

16. The positive lithium supplement material according to any one of claims 1 to 15, wherein the core has a median particle diameter in a range of 5 µm to 20 µm.

17. The positive lithium supplement material according to any one of claims 1 to 16, wherein the inorganic coating layer has a thickness in a range of 5 nm to 50 nm.

18. The positive lithium supplement material according to any one of claims 1 to 17, wherein the organic coating layer has a thickness in a range of 5 nm to 50 nm.

19. A method of preparing a positive lithium supplement material, the method comprising:
providing a core, the core comprising LiₓM_{y}O_{z}, the M element comprising at least one of Al, Ti, V, Cr, Mn, Fe, Co, Ni, Cu, or Zn, wherein 2 ≤ x ≤ 6, 1 ≤ y ≤ 2, 2 ≤ z ≤ 4;
forming an inorganic coating layer on at least part of a surface of the core; and
obtaining the positive lithium supplement material by forming an organic coating layer on at least part of a surface of the inorganic coating layer away from the core.

20. The method according to claim 19, wherein the providing the core comprises:
obtaining LiₓM_{y}O_{z} by mixing an oxide containing the M element with a lithium source and performing first heating treatment on the oxide and the lithium source,
wherein the number of moles of the lithium element during the mixing is a, the number of moles of the M element during the mixing is b, a ratio of a to b is m, a ratio of x to y is n, a ratio of a difference between m and n to n is c, and c is in a range of 0% to 50%.

21. The method according to claim 20, wherein the lithium source comprises at least one of lithium hydroxide, lithium oxide, lithium acetate, lithium carbonate, lithium nitrate, or lithium oxalate.

22. The method according to claim 20 or 21, wherein the mixing is ball-milling mixing, the ball-milling mixing being performed at a rotational speed in a range of 200 rpm to 600 rpm, a duration of the ball-milling mixing being in a range of 2 h to 12 h.

23. The method according to any one of claims 20 to 22, wherein a temperature of the first heating treatment is in a range of 400°C to 900°C, a duration of the first heating treatment being in a range of 6 h to 48 h.

24. The method according to any one of claims 19 to 23, wherein the forming the inorganic coating layer on at least part of the surface of the core comprises:
obtaining the core having the inorganic coating layer on at least part of the surface of the core by mixing an oxide with the core and performing second heating treatment on the oxide and the core,
wherein the oxide is a binary oxide.

25. The method according toclaim 24, wherein the binary oxide comprises at least one of B₂O₃, P₂O₃, P₂O₅, As₂O₃, Sb₂O₃, Sb₂O₅, SeO₂, TiO₂, Cr₂O₃, MnO₂, CoO, CuO, or Al₂O₃.

26. The method of claim 24 or 25, wherein a temperature of the second heating treatment is equal to or greater than a melting point of the binary oxide.

27. The method according to any one of claims 24 to 26, wherein the oxide comprises a plurality of binary oxides, a temperature of the second heating treatment being equal to or greater than a melting point of at least one of the plurality of binary oxides.

28. The method according to any one of claims 24 to 27, wherein a duration of the second heating treatment is in a range of 2 h to 12 h.

29. The method according to any one of claims 19 to 28, wherein the forming the organic coating layer on at least part of the surface of the inorganic coating layer away from the core comprises:
obtaining a dispersion by mixing the core having the inorganic coating layer on at least part of the surface of the core with a polymer solution and performing third heating treatment on the core and polymer solution; and
obtaining the positive lithium supplement material by performing fourth heating treatment on the dispersion.

30. The method according to claim 29, wherein the polymer solution comprises at least one of polytetrafluoroethylene micropowder, polyethylene micropowder, polypropylene micropowder, polystyrene micropowder, amino-polystyrene micropowder, ethylene-vinyl acetate copolymer, polydimethylsiloxane and derivatives thereof, epoxy resin, polyacrylonitrile, polyvinylpyrrolidone, or alkylsilane and derivatives thereof.

31. The method according to claim 29, wherein the polymer solution comprises a conductive carbon material, the conductive carbon material comprising at least one of conductive carbon black, single-walled carbon nanotubes, multi-walled carbon nanotubes, fullerenes, or graphene.

32. The method according to any one of claims 29 to 31, wherein a temperature of the third heating treatment is in a range of 50°C to 150°C.

33. The method according to any one of claims 29 to 32, wherein a temperature of the fourth heating treatment is in a range of 200°C to 400°C, and/or a duration of the fourth heating treatment is in a range of 1 h to 6 h.

34. A positive electrode plate, comprising:
a positive electrode current collector; and
a positive active substance layer comprising the positive lithium supplement material according to any one of claims 1 to 18 and/or the positive lithium supplement material prepared by the method according to any one of claims 19 to 33.

35. A secondary battery, comprising the positive electrode plate according to claim 34.

36. An electrical device, comprising the secondary battery according to claim 35.
